# EUROPEAN PATENT SPECIFICATION

(11) **EP 1 327 082 B1**
(45) Date of publication and mention of the grant of the patent: **31.08.2005**
(21) Application number: 01976444.8
(22) Date of filing: 11.10.2001
(51) Int. Cl.: F16B 19/05, F16B 19/10

(54) **BLIND FASTENER**
BLINDBEFESTIGER
FIXATION EN AVEUGLE

(30) Priority: 19.10.2000 GB 0025628
(43) Date of publication of application: 16.07.2003
(73) Proprietor: TEXTRON FASTENING SYSTEMS LIMITED, Hertfordshire AL7 1EZ (GB)
(72) Inventor: DENHAM, Keith, Hertfordshire AL6 0SR (GB)
(74) Representative: Mackenzie, Andrew Bryan
(86) International application number: PCT/GB2001/004543
(87) International publication number: WO 2002/033273

(56) References cited:
- WO-A-00/36309
- FR-A- 2 314 387
- US-A- 5 651 649

## Description

The invention relates to a blind fastener.

WO-A-00/36309 discloses a blind fastener which has a pin extending inside a sleeve and which engages the sleeve at one end. The other end of the sleeve has a radially enlarged head which is intended to be on the near face of a workpiece when the fastener is inserted into an aperture in a workpiece. The head includes a frangible element which fractures at a predetermined pulling load once a generally predetermined bulb has been formed by an expanding portion of the sleeve on the blind side of the workpiece. Once the frangible element has broken an abutment member moves along the pin and clamps the workpieces together. The fastener provides a single clamping force and has a non-deformable head.

The invention provides, in one of its aspects, a blind fastener as hereinafter defined in claim 1 of the accompanying claims

Further preferred embodiments of the invention are set out in the succeeding claims.

Two specific embodiments of the invention, including a modification of one of them, will now be described by way of example and with reference to the accompanying drawings, in which:
Figures 1A and 1B show a first example in which the locking member is a collar;
Figures 2 to 9 show successive stages in the installation of the fastener of Figures 1A and B;
Figures 10 and 11 show a modification of the fastener of Figures 1A and 1 B; and
Figures 12 to 18 show successive stages in the installation of a second example in which the locking member is a nut.

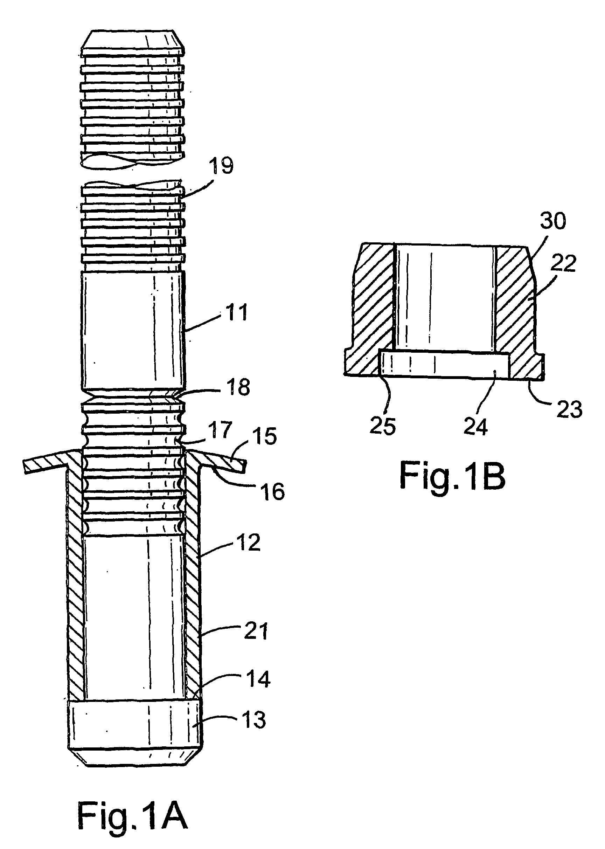

The first example fastener comprises a pin, a body and a collar. The pin 11 is shown in Figure 1A in elevation and is pre-assembled in the tubular body 12 which is shown in axial section. The pin has a radially enlarged head 13 which abuts the tail end face 14 and is of the same external diameter thereas, the other end of the body being formed with a radially enlarged head 15. The head 15 is of dished or shallow conical shape and has a shallow conical space 16 under the head. The tail portion of the pin 11 protrudes from the head end of the body, and is provided with locking grooves 17, a breaker groove 18 and tool jaw-engaging gripping grooves 19.

It will be apparent to those skilled in the art of blind fastenings that the fastener as thus far described resembles a well-known form of blind rivet, and it functions in much the same way. During the first part of the installation process, the tail-most zone of the body shank 21 collapses radially outwardly to form a blind head, as will be described later. To this end, the body shank 21 is provided with band-annealed weakened zone at an appropriate position along its length. In conjunction with the blind head, the body head 15 provides the first securing means.

In this example, second securing means is provided by a collar 22, shown in Figure 1 B. The collar has a flat end face 23, in which is provided with a radially enlarged counterbore 24, which meets the end face 23 in a square-section edge 25. The other end of the collar has a chamfer 30.

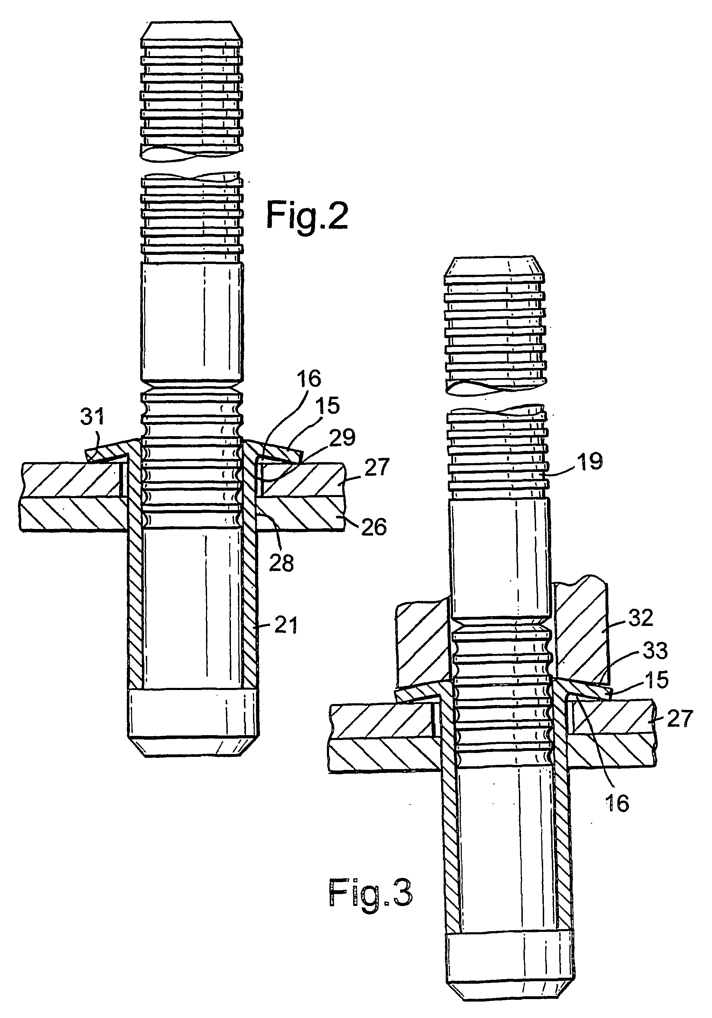

Figures 2 to 9 show the installation of this fastener to secure together two sheet-like members 26 and 27 of a workpiece. The rear member 26 has a hole 28 in which the shank 21 of the fastener body is a close fit, whilst the front member 27 has a hole of slightly larger diameter. The two members 26 and 27 are positioned in mutual contact with the hole 29 overlying the hole 28. The body shank 21 is inserted through the holes 29 and 28 until the outside rim 31 of the body head 15 contacts the near face of the front member 27. The majority of the length of the shank 21 of the body protrudes from the rear member 26. This is the position shown in Figure 2.

A pulling tool, similar to the well-known blind riveting tool, is then placed over the fastener pin tail end, as shown in Figure 3.

The tool has a nosetip 32 which has a shallow conical anvil face 33. This conical anvil face has a slightly larger included angle than the face of the head 15 of the fastener body. In this example, the included angle of the anvil face is 162°, whereas the included angle of the body head is 158°.

The tool operator presses the tool towards the members so that the anvil face 33 is in contact with the body head 15 and presses it against the front member 27. The operator then actuates the tool so that jaws (not shown) engage the gripping grooves 19 on the pin tail and exert tension on the pin, the reaction being taken up by the anvil face 33 against the body head 15.

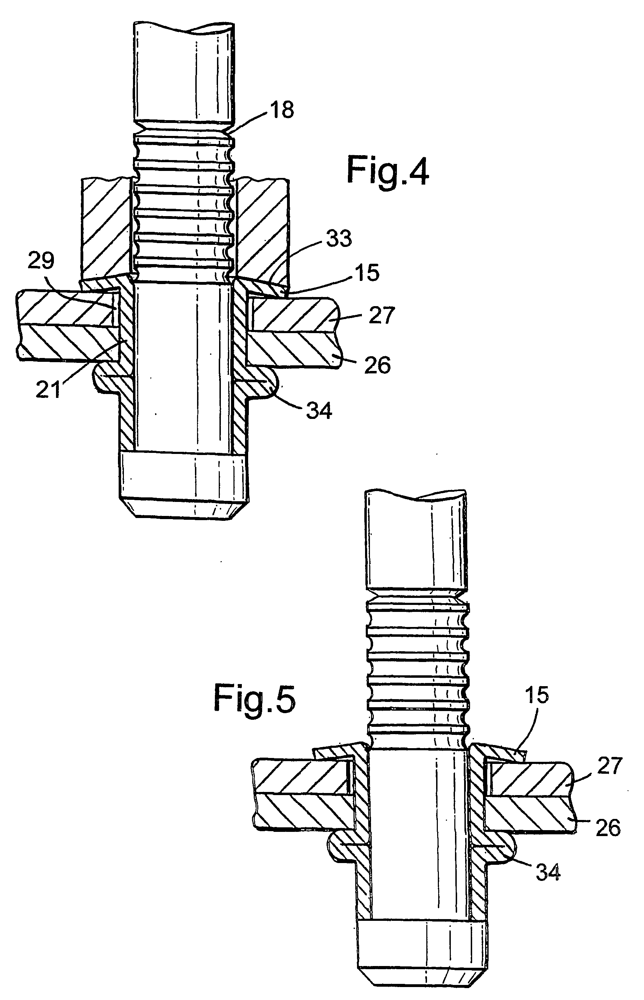

This exerts an increasing axial compression on the shank 21 of the fastener body, with the result that the protruding rear portion of the shank bulges outwardly to form a blind head 34, as shown in Figure 4. This deformation is promoted by the aforementioned weakened zone in the body shank. The members 26 and 27 are pushed together between the preformed body head 15 and the blind head 34, thus closing any gap which may initially exist between the members. The reaction between the nosetip and the body head 15 causes the latter to deform slightly, to conform to the slightly shallower shape of the anvil face. (Even if the body head 15 had initially been flat instead of conical, the force exerted on the head would have caused the head to deform to conform to the anvil shape).

In the example fastener shown, which has a body shank diameter of 10 millimetres, the body head 15 is designed to deform at a force of 2 kN. The blind bulbed head is sufficiently formed to engage the rear member at an applied force of approximately 15 kN, and is fully formed at approximately 20 kN. The installation tool for this first part of the installation process is preset to exert a maximum force on the fastener which is greater than the 20 kN to fully form the blind head 34 and less than the force required to break the pin breaker groove 18, which in this example is approximately 50 kN. Because the body head 15 is supported by the anvil face 33 during this part of the process, there is no significant deformation of it after the first 2 kN of force has been applied.

The tool operator then de-activates the tool, so that the gripping jaws release the pin tail, and removes the tool from the fastener.

The clamp force created to clamp the workpiece members 26 and 27 together may be greater than the 2 kN required to deform the body head 15, and which is the force supported by this deformed head. However, as the installation tool disengages from the fastener, the deformed body head 15 relaxes under the clamp force, thereby reducing the clamp force to 2 kN. This is the position illustrated in Figure 5. The residual clamp force of 2 kN is low enough to allow lateral adjustment of the two members 26, 27 relative to each other, if needed, making use of the clearance of the hole 29 in the front member 27 around the body shank 21.

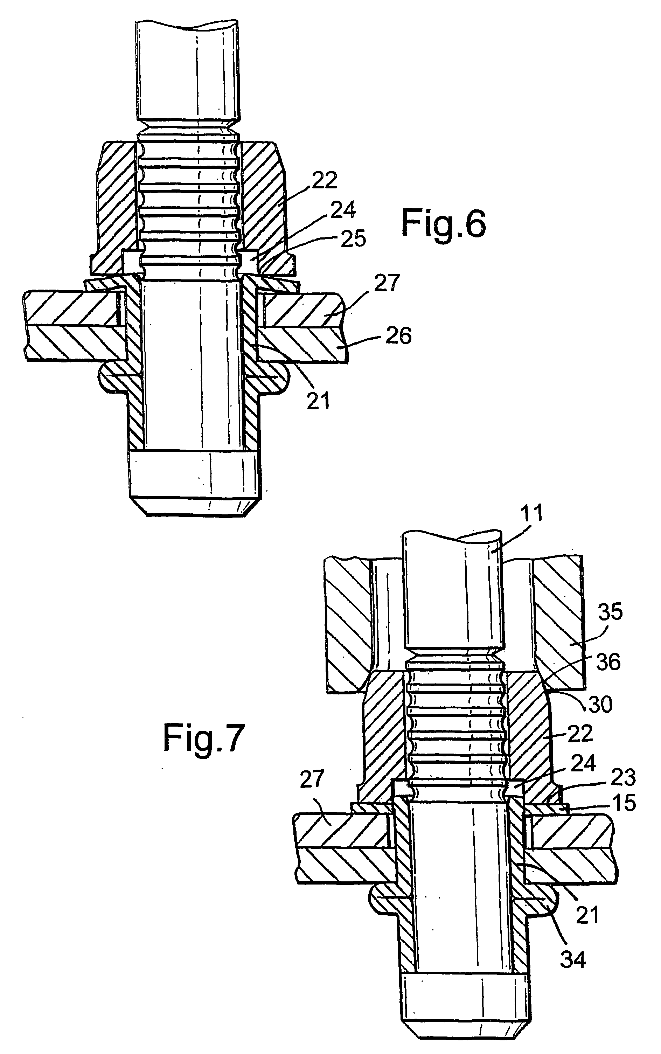

After any such adjustment has been made, the second part of the installation process is started. As illustrated in Figure 6, a collar 22 is placed over the protruding pin 11 and pushed towards the members 26 and 27 until the collar counterbore edge 25 contacts the head 15 of the fastener body. As is apparent from Figure 6, the diameter of the collar counterbore 24 is slightly greater than the outside diameter of the body shank 21.

A second installation tool is now applied to the protruding pin tail 11 and the collar 22. This tool is similar to the well-known type of tool used for installing swage-type lockbolts. The tool nosetip 35 has an internally chamfered and curved face 36 which is of an appropriate size to co-operate with the chamfer 30 of the collar. The operator actuates the tool so that it engages with and grips the gripping grooves on the pin tail (not shown in Figure 7) and applies increasing tension to the pin tail 11, the reaction being taken up by reaction of the anvil face 36 on the collar 22 and thereby of the collar edge 25 on the body head 15. This tool is preset to apply substantially greater tension than is the first tool. As the tension applied by it increases, the head 15 of the body shears annularly, since the diameter of the collar counterbore edge 25 is slightly greater than the outside diameter of the body shank 21. The sheared-off head 15 is driven against the front face of the front sheet, where it acts as a washer between the collar face 23 and the front member 27. The counterbore 24 of the collar is sufficiently deep to allow the top end of the body shank 21 to enter it without meeting the end of the counterbore, even if further compression of the blind head and of members 27 and 26 occurs. The axial clamp force between the collar 22 and the blind head 34 is exerted completely on the members 26 and 27, none of it being supported by the fastener body.

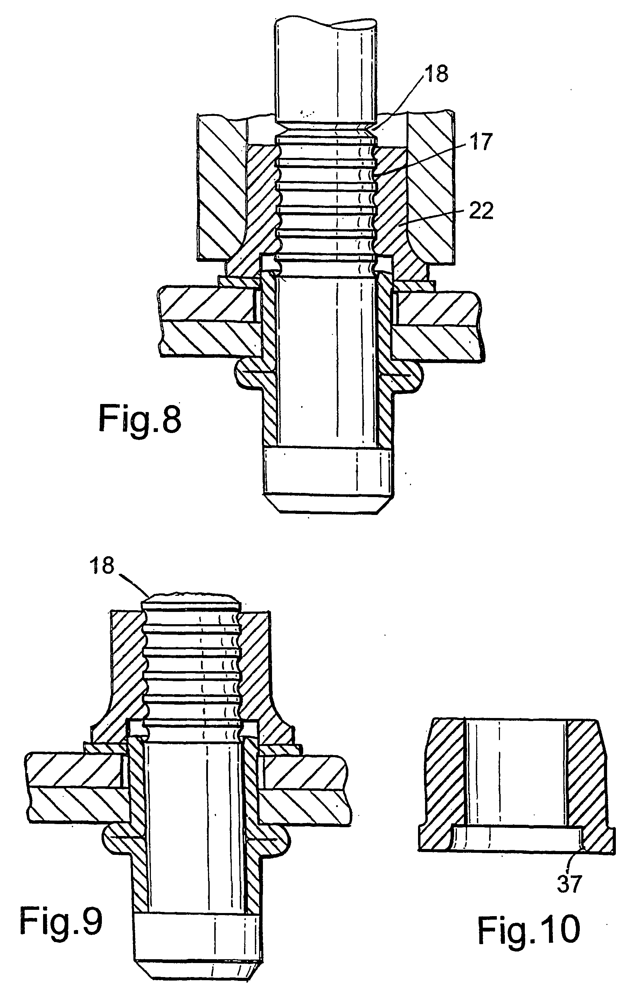

As the force exerted by the tool continues to increase, the tool anvil compresses the collar radially inwardly and passes down over it, swaging the collar into the locking grooves 17 on the pin, and securing the collar to the pin. This is the position shown in Figure 8.

As the force increases still further, the tension on the pin tail causes the pin to fracture at the breaker groove 18. This is the position shown in Figure 9, after the tool and broken-off pin tail have been removed from the fully installed fastener.

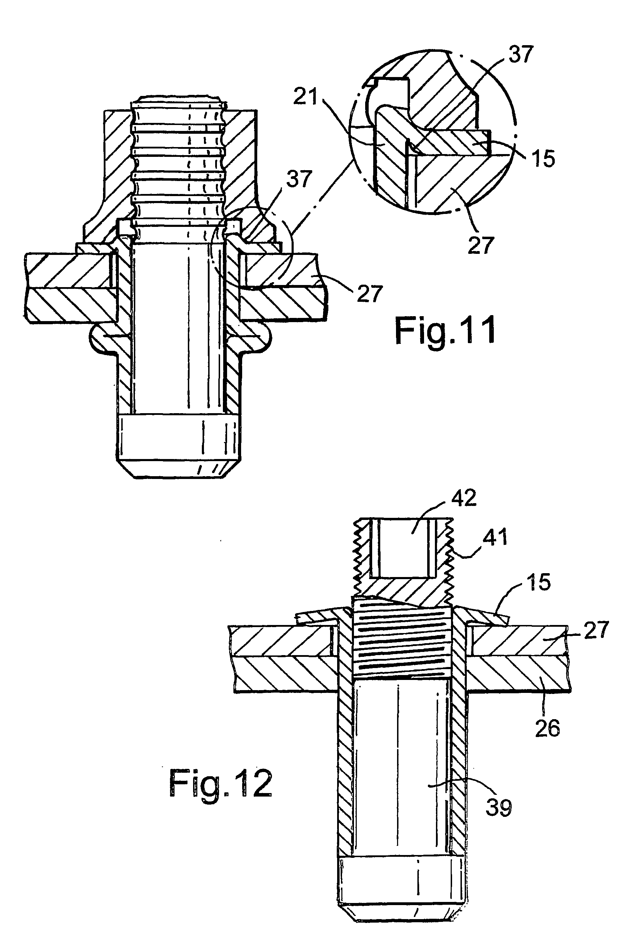

One possible modification of the fastener just described is illustrated in Figures 10 and 11. In this, the collar counterbore has a radiussed edge 37. This has the result of not shearing the body head 15 from the shank 21, but of deforming it, still connected to the shank 21, into contact with the front face of the member 27. This provides a slightly larger area of contact with the face, but the residual clamp load is reduced (compared with the sheared-off head version).

A second example fastener is illustrated in Figures 12 to 18, corresponding respectively to Figures 2 to 9 of the first example. The fastener of this second example is generally similar to that of the first example, and only the differences will be described. In the second example, the collar is replaced by an internally threaded nut 38. The nut 38 has a counterbore 24, with a square leading edge 25, like the collar in the first example. The tail end of the pin 39 is shorter and is provided with a threaded portion 41 to mate with the nut 38. The end face of the pin is provided with a hexagonal wrenching recess 42. There are no gripping grooves, locking grooves or breaker groove. Two rotary tools are used in the installation process, both of which have a non-rotatable hexagonal key which engages the pin recess 42 to prevent the pin from rotating.

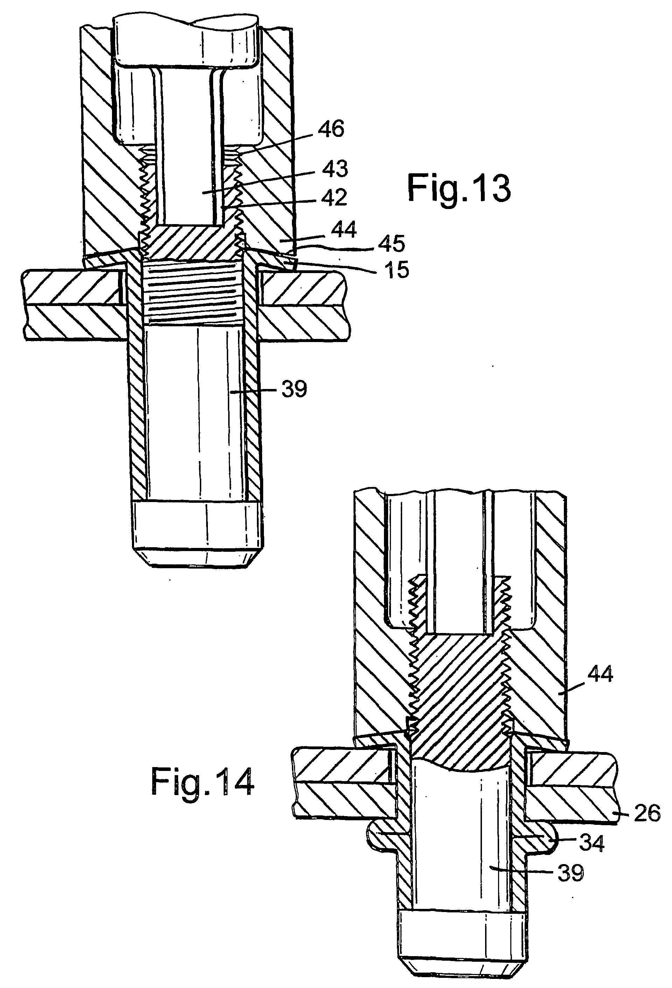

Figure 12 shows the fastener inserted through the members 26 and 27 so that the body head 15 contacts the front sheet 27. A first rotary tool is then applied to the fastener. The tool hexagonal key 43 is sprung forwardly so that it engages in the recess 42 of the fastener pin but can retract with respect to the tool nosepiece 44, which is internally threaded at 46 to engage the pin and which has a conical anvil face 45 similar to the anvil face 33 of the first tool in the first example. The tool is actuated so as to cause rotation of the anvil 44 with respect to the wrench pin 43, thus securing the anvil down on to the fastener, until the anvil face 45 contacts the fastener body head 15. This is the position shown if Figure 13.

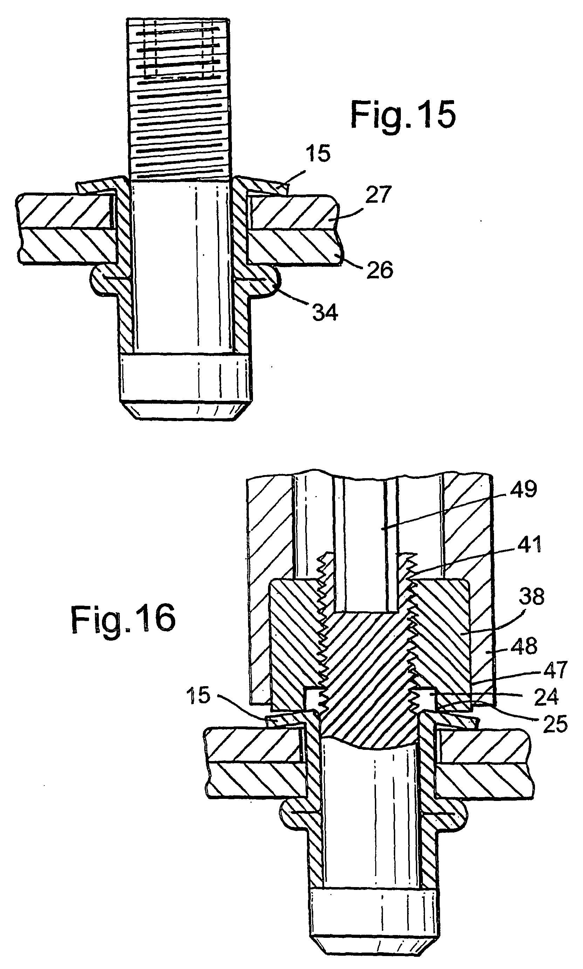

Continued operation of this tool draws the fastener pin 39 into the nosetip, causing the formation of a blind head 34 which contacts the rear member 26, and the slight deformation of the body head to conform to the shape of the tool anvil face 45, as shown in Figure 14. This first tool is preset to reverse at the torque corresponding to this position, and it is then removed from the fastener, leaving the fastener securing the members 26 and 27 at a pre-determined low clamp value, as shown in Figure 15. They can then be laterally adjusted if needed.

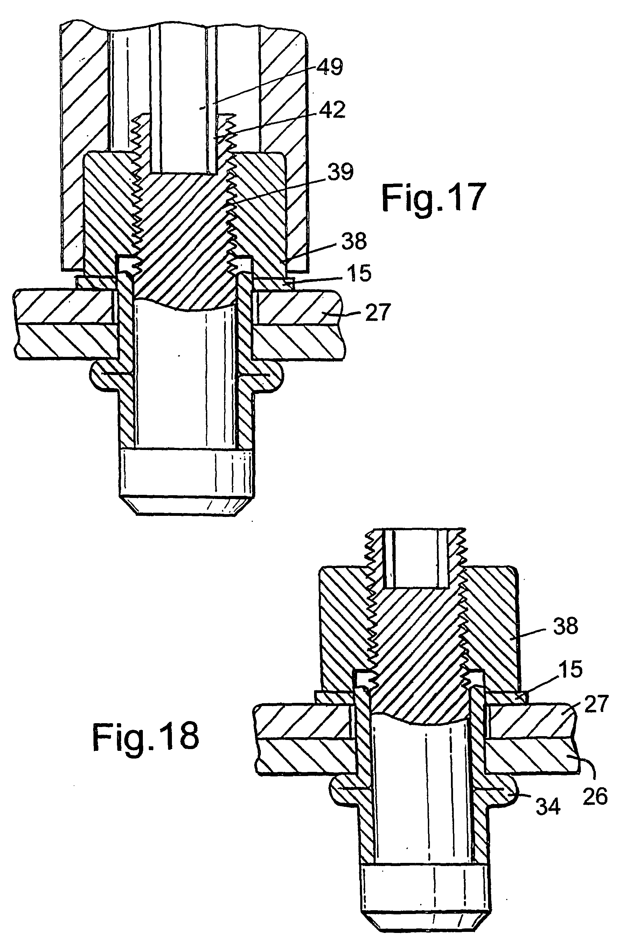

A nut 38 is then threaded over the threaded portion 41 of the pin. This may be done by hand or by a separate application tool, but is most conveniently done by preloading the nut in the matching wrenching socket 47 in the nosetip 48 of the second installation tool. The tool is actuated, to rotate the nosetip 48 with respect to the fixed key 49 of the tool, which is axially fixed and not retractable. The nut 38 has a counterbore 24 with a shank edge 25, like the collar 22 in the first example. As the nut 38 progresses down the pin, it first contacts the head 15 of the fastener body, as shown in Figure 16. Further action of the tool causes the head 15 to shear from its body, as in the first example and as shown in Figure 17. It then acts as a washer between the rotating nut 38 and the front member 27, to prevent damage to the latter. The second tool continues to apply an increasing driving torque to the fastener nut, until the preset level, corresponding to the desired high clamp level, is achieved. The tool then reverses, to withdraw from the fully installed fastener, as shown in Figure 18.

The fastener of this second embodiment has the advantage that, unless bulbing of the body shank to form a blind head has been achieved during the first part of the installation process, there is insufficient projection of the fastener pin 39 for the fixed wrenching key 49 of the second tool to engage the pin wrenching recess 42. If this occurs, the whole fastener would be rotated by the second tool, making it obvious that the first part of the installation process had not been completed properly.

It will be apparent that the fasteners described in the foregoing examples meet the requirement of manufacturing industries for an initial, low clamp, securing together of two or more members so as to allow relative lateral adjustment, followed by a final, high clamp, locking of the members together. This two-stage fastening is known as a "fit-up" facility.

If such a facility is not required, it is not necessary to limit the clamp force in the first part of the installation process. Consequently the example fasteners could then be modified by providing a thicker and stronger body head, limited only by the need to ensure that the head is sheared through prior to swaging of the collar in the case of the first example, or that the required maximum torque is reached in the case of the second example.

The invention is not restricted to the details of the foregoing examples.

## Claims

1. A blind fastener for installation in a workpiece comprising a plurality of members thereby to secure them together, which workpiece has a near face, the fastener comprising a tubular body (12) and **characterised by** a radially extending relaxable head (15) at one end of the body whereby the fastener may be subject to a first part of an installation process in the workpiece so that the head (15) provides a controlled lower level of clamp force in the workpiece, whereby the workpiece members (26, 27) are initially coupled together but may be laterally adjusted relative to each other, and second securing means (22) whereby the fastener may be subject to a second part of the installation process to provide a high level of clamp force in the workpiece, thereby to lock the workpiece members (26, 27) together.

2. A fastener as claimed in claim 1, which fastener includes a pin member (11) extending through the body (12), wherein the head (15) is adapted to contact the near face of the workpiece, the aforesaid first securing means being provided by the head (15) which, after the first part of the installation process as aforesaid, will yield under a force greater than the aforesaid controlled lower level of clamp force.

3. A fastener as claimed in claim 2, in which the body head (15) is adapted to be deformed by the installation tool used during the first part of the installation process, by an amount corresponding at least to the controlled lower level of clamp force.

4. A fastener as claimed in claim 2 or claim 3, in which the head (15) of the fastener body, before installation, has an underhead recess (16).

5. A fastener as claimed in claim 1, which fastener includes a body (12) and a pin (11) extending therethrough and protruding therefrom, in which the second securing means (22) is provided by a locking member which, during the second part of the installation process, applies the high level of clamp force to the head of the body (15) and is then secured to the pin member (11).

6. A fastener as claimed in claim 4 and in claim 5, in which the locking member is provided with a radially enlarged counterbore (24) at its end which contacts the body head (15).

7. A fastener as claimed in claim 5 or claim 6, in which the body head (15) is sheared through by the locking member (22) when it applies the high level of clamp force to the head of the body (15) and before it is finally secured to the pin member (11).

8. A fastener as claimed in claim 7, in which the sheared off body head (15) acts as a washer between the body shank (21) and the locking member (22).

9. A fastener as claimed in claim 7 or claim 8, in which the depth of the counterbore (24) in the locking member (22) is sufficient for the end portion of the tubular body shank (21) to enter therein after it has sheared from the head (15).

10. A fastener as claimed in any of claims 5 to 9, in which the locking member (22) is provided by a collar which is secured to the pin member (11) by swaging during the second part of the installation process.

11. A fastener as claimed in any of claims 5 to 9, in which the locking member is provided by a threaded nut (38).

12. A fastener as claimed in claim 5 or claim 6, in which during the second part of the installation process the body head (15) plastically deforms but does not separate from the body shank.

13. A fastener as claimed in any of claims 5 to 12, in which the end portion of the pin (39) protrudes beyond the locking member (38), after the first part of the installation process, sufficiently to engage an installation tool (49) for the second part of the installation process only if the first part of the installation process had been correctly carried out.

## Patentansprüche

1. Blindbefestigungselement zum Einbau in ein Werkstück, das eine Vielzahl von Elementen umfaßt, um sie **dadurch** aneinander zu befestigen, wobei das Werkstück eine nahe Seite hat, wobei das Befestigungselement einen röhrenförmigen Körper (12) umfaßt, und **gekennzeichnet durch** einen in Radialrichtung verlaufenden entspannbaren Kopf (15) an einem Ende des Körpers, wodurch das Befestigungselement einem ersten Teil eines Einbauvorgangs in das Werkstück unterworfen werden kann, so daß der Kopf (15) ein geregeltes niedrigeres Niveau an Klemmkraft im Werkstück gewährleistet, wodurch die Werkstückelemente (26, 27) anfangs miteinander verbunden werden, aber im Verhältnis zueinander seitlich ausgerichtet werden können, und zweite Befestigungsmittel (22), wodurch das Befestigungselement einem zweiten Teil des Einbauvorgangs unterworfen werden kann, um ein hohes Niveau an Klemmkraft im Werkstück zu gewährleisten, um **dadurch** die Werkstückelemente (26, 27) aneinander festzuklemmen.

2. Befestigungselement nach Anspruch 1, wobei das Befestigungselement ein Stiftelement (11) umfaßt, das durch den Körper (12) verläuft, wobei der Kopf (15) geeignet ist, die nahe Seite des Werkstücks zu berühren, wobei das oben erwähnte erste Befestigungsmittel durch den Kopf (15) bereitgestellt wird, der, nach dem ersten Teil des Einbauvorgangs, wie oben erwähnt, unter einer Kraft, die größer ist als das oben erwähnte geregelte niedrigere Niveau an Klemmkraft, nachgeben wird.

3. Befestigungselement nach Anspruch 2, wobei der Körperkopf (15) geeignet ist, durch das während des ersten Teils des Einbauvorgangs verwendete Einbauwrerkzeug verformt zu werden, mit einem Maß, das wedigstens dem geregelten niedrigeren Niveau an Klemmkraft entspricht.

4. Befestigungselement nach Anspruch 2 oder Anspruch 3, wobei der Kopf (15) des Befestigungselementkörpers vor dem Einbau eine Aussparung (16) unter dem Kopf hat.

5. Befestigungselement nach Anspruch 1, wobei das Befestigungselement einen Körper (12) und einen Stift (11), der durch demselben erläuft und von demselben vorsteht, einschließt, wobei das zweite Befestigungsmittel (22) durch ein Sicherungselement bereitgestellt wird, das während des zweiten Teils des Einbauvorgangs das hohe Niveau an Klemmkraft auf den Kopf (15) des Körpers ausübt und danach am Stiftelement (11) befestigt wird.

6. Befestigungselement nach Anspruch 4 und Anspruch 5, wobei das Sicherungselement an seinem Ende, das den Körperkopf (15) berührt, mit einer in Radialrichtung erweiterten Senkung (24) versehen wird.

7. Befestigungselement nach Anspruch 5 oder Anspruch 6, wobei der Körperkopf (15) durch das Sicherungselement (22) durchgeschert wird, wenn es das hohe Niveau der Klemmkraft auf den Kopf (15) des Körpers ausübt und bevor es schließlich am Stiftelement (11) befestigt wird.

8. Befestigungselement nach Anspruch 7, wobei der abgescherte Körperkopf (15) als Unterlegscheibe zwischen dem Körperschaft (21) und dem Sicherungselement (22) wirkt.

9. Befestigungselement nach Anspruch 7 oder Anspruch 8, wobei die Tiefe der Senkung (24) im Sicherungselement (22) ausreicht, damit der Endabschnitt des röhrenförmigen Körperschafts (21) in dieselbe eintritt, nachdem er vom Kopf (15) abgeschert ist.

10. Befestigungselement nach einem der Ansprüche 5 bis 9, wobei das Sicherungselement (22) durch einen Bund bereitgestellt wird, der während des zweiten Teils des Einbauvorgangs durch Stauchen am Stiftelement (11) befestigt wird.

11. Befestigungselement nach einem der Ansprüche 5 bis 9, wobei das Sicherungselement durch eine Gewindemutter (38) bereitgestellt wird.

12. Befestigungselement nach Anspruch 5 oder Anspruch 6, wobei sich der Körperkopf (15) während des zweiten Teils des Embauvorgangs plastisch verformt, sich aber nicht vom Körperschaft trennt.

13. Befestigungselement nach einem der Ansprüche 5 bis 12, wobei der Endabschnitt des. Stifts (39), nach dem ersten Teil des .Einbauvorgangs, nur ausreichend über das Sicherungselement (38) hinaus vorspringt, um ein Einbauwerkzeug (49) für den zweiten Teil des Einbauvorgangs in Eingriff zu nehmen, falls der erste Teil des Einbauvorgangs richtig ausgeführt worden ist.

## Revendications

1. Fixation en aveugle destinée à être installée dans une pièce d'oeuvre comprenant plusieurs éléments, en vue de leur assemblage, la pièce d'oeuvre comportant une face proche, la fixation comprenant un corps tubulaire (12) et étant **caractérisée par** une tête à détente à extension radiale (15) au niveau d'une extrémité du corps, la fixation pouvant ainsi être soumise à une première partie d'un procédé d'installation dans la pièce d'oeuvre, la tête (15) établissant un niveau inférieur contrôlé de la force de serrage dans la pièce d'oeuvre, les éléments de la pièce d'oeuvre (26, 27) étant initialement accouplés mais pouvant être ajustés latéralement les uns par rapport aux autres, et un deuxième moyen de fixation (22) permettant de soumettre la fixation à une deuxième partie du procédé d'installation pour établir un niveau élevé de la force de serrage dans la pièce d'oeuvre, pour assembler ainsi par verrouillage les éléments de la pièce d'oeuvre (26, 27).

2. Fixation selon la revendication 1, la fixation englobant un élément de goupille (1 1) s'étendant à travers le corps (12); la tête (15) étant destinée à contacter la face proche de la pièce d'oeuvre, ledit premier moyen de fixation étant constitué par la tête (15), qui, après l'exécution de la première partie dudit procédé d'installation, est fléchie en présence d'une force supérieure à ladite force de serrage de niveau inférieur contrôlé.

3. Fixation selon la revendication 2, dans laquelle la tête du corps (15) est destinée à être déformée par l'outil d'installation utilisé au cours de la première partie du procédé d'installation, l'importance de la déformation correspondant au moins à la force de serrage du premier niveau inférieur contrôlé.

4. Fixation selon es revendications 2 ou 3, dans lequel la tête (15) du corps de la fixation comporte un évidement au-dessous de la tête (16) avant l'installation.

5. Fixation selon la revendication 1, la fixation englobant un corps (12) et une goupille (11) le traversant et débordant de celui-ci, le deuxième moyen de fixation (22) étant constitué par un élément de verrouillage, appliquant, lors de la deuxième partie du procédé d'installation, le niveau élevé de la force d'installation à la tête du corps (15) avant d'être fixée sur l'élément de goupille (11).

6. Fixation selon les revendications 4 et 5, dans laquelle l'élément de verrouillage comporte un contre-alésage à agrandissement radial (24) au niveau de son extrémité contactant la tête du corps (15).

7. Fixation selon les revendications 5 ou 6, dans laquelle la tête du corps (5) est dégagée par cisaillement par l'élément de verrouillage (22) lors de l'application du niveau élevé de la force de serrage à la tête du corps (15) et avant sa fixation finale sur l'élément de goupille (11).

8. Fixation selon la revendication 7, dans laquelle la tête du corps cisaillée (15) sert de rondelle entre la tige du corps (21) et l'élément de verrouillage (22).

9. Fixation selon les revendications 7 ou 8, dans laquelle la profondeur du contre-alésage (24) dans l'élément de verrouillage (22) est suffisante pour permettre l'entrée de la partie d'extrémité de la tige du corps tubulaire (21) après son dégagement par cisaillement de la tête (15).

10. Fixation selon l'une quelconque des revendications 5 à 9, dans laquelle l'élément de verrouillage (22) est constitué par un collier fixé sur l'élément de goupille (11) par emboutissage au cours de la deuxième partie du procédé d'installation.

11. Fixation selon l'une quelconque des revendications 5 à 9, dans laquelle l'élément de verrouillage est constitué par un écrou fileté (38).

12. Fixation selon les revendications 5 ou 6, dans laquelle, au cours de la deuxième partie du procédé d'installation, la tête de corps (15) est soumise à une déformation plastique mais n'est pas séparée de la tige du corps.

13. Fixation selon l'une quelconque des revendications 5 à 12, dans laquelle la partie d'extrémité de la goupille (39) déborde au-delà de l'élément de verrouillage (38), après la première partie du procédé d'installation, de manière suffisante pour permettre l'engagement d'un outil d'installation (49) pour la deuxième partie du procédé d'installation, uniquement lorsque la première partie du procédé d'installation a été exécutée de manière correcte.
